(19) Europäisches Patentamt
European Patent Office
Office européen des brevets

(11) Numéro de publication: **0 190 550**
**A1**

(12) **DEMANDE DE BREVET EUROPEEN**

(21) Numéro de dépôt: 86100025.5

(22) Date de dépôt: 02.01.86

(51) Int. Cl.[4]: **H 04 N 1/00**

(30) Priorité: 08.01.85 FR 8500194

(43) Date de publication de la demande: 13.08.86 Bulletin 86/33

(84) Etats contractants désignés: BE DE FR GB IT NL

(71) Demandeur: **LIGNES TELEGRAPHIQUES ET TELEPHONIQUES L.T.T.**
**1, rue Charles Bourseul**
**F-78702 Conflans-Ste-Honorine(FR)**

(72) Inventeur: **Triboulet, Michel**
**Le Mas Laurent 2, allée des Mimosas**
**F-91440 Bures sur Yvette(FR)**

(72) Inventeur: **Balza, Claude**
**9, rue du Vexin**
**F-78570 Andresy(FR)**

(74) Mandataire: **Weinmiller, Jürgen et al,**
**Zeppelinstrasse 63**
**D-8000 München 80(DE)**

(54) **Procédé interactif de consultation d'une banque d'images de qualité télévision par l'intermédiaire d'un serveur connecte à un réseau de transmission d'informations et système de mise en oeuvre du procédé.**

(57) Le système selon l'invention comprend au moins un serveur (1) comportant au moins une mémoire ($S_1$ à $S_n$) d'images fixes de type télévision et un centre distributeur (3) relié à des terminaux (4) d'abonnés par un canal de transmission unidirectionnel à large bande (CV) et un canal de transmission de données numériques (CN). Les signaux représentant les images sont transmis séquentiellement et cycliquement sur le canal à large bande accompagnés de signaux d'identification. Chaque terminal (4) d'abonné comporte une mémoire (43) d'image et des moyens de reconnaissance (42) des signaux d'identification. Dans des variantes supplémentaires, il est prévu plusieurs mémoires d'images ($M_1$ à $M_m$).

EP 0 190 550 A1



Croydon Printing Company Ltd

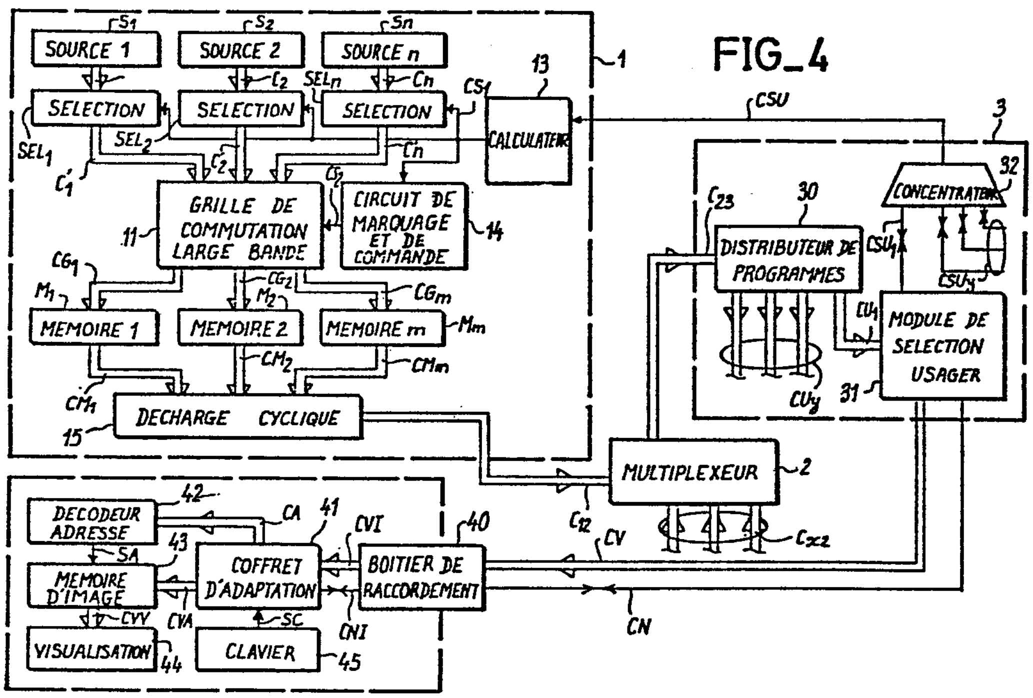
FIG_4
SOURCE 1
SOURCE 2
SOURCE n
SELECTION
SELECTION
SELECTION
CALCULATEUR
GRILLE DE COMMUTATION LARGE BANDE
CIRCUIT DE MARQUAGE ET DE COMMANDE
MEMOIRE 1
MEMOIRE 2
MEMOIRE m
DECHARGE CYCLIQUE
MULTIPLEXEUR
DISTRIBUTEUR DE PROGRAMMES
CONCENTRATEUR
MODULE DE SELECTION USAGER
DECODEUR ADRESSE
MEMOIRE D'IMAGE
VISUALISATION
COFFRET D'ADAPTATION
CLAVIER
BOITIER DE RACCORDEMENT
CSU
CV
CN
1
2
3
11
13
14
15
30
31
32
40
41
42
43
44
45

# PROCEDE INTERACTIF DE CONSULTATION D'UNE BANQUE D'IMAGES DE QUALITE TELEVISION PAR L'INTERMEDIAIRE D'UN SERVEUR CONNECTE A UN RESEAU DE TRANSMISSION D'INFORMATIONS ET SYSTEME DE MISE EN OEUVRE DU PROCEDE

L'invention concerne un procédé interactif de consultation d'une banque d'images de qualité télévision par des abonnés reliés à un réseau de transmission d'informations, la consultation étant effectuée par l'intermédiaire d'un ou plusieurs serveurs et d'un centre de distribution.

L'invention concerne également un système mettant en oeuvre un tel procédé.

Le passé récent a vu la multiplication de réseaux de transmissions d'informations permettant la consultation interactive, c'est-à-dire avec interventions d'abonnés sur la sélection des informations transmises ou au moins sur la réception effective par l'abonné de certaines informations parmi les informations transmises.

Par informations, il faut entendre toutes sortes de données : données numériques, images, etc. L'invention pour sa part est plus particulièrement concernée par les services de diffusion d'images de type télévision fixes ou faiblement animées transmises par des réseaux de vidéocommunications.

Les applications de ce type de transmission sont variées et on peut citer, à titre d'exemples non limitatifs :

- les canaux de services d'une télévidéothèque,
- la consultation d'un catalogue d'un organisme de vente par correspondance,
- le consultation d'horaires,
- la transmission de jeux d'images pour la simulation et la stratégie,
- le téléenseignement,
- etc.

La source d'images diffusées devant offrir de préférence un accès aléatoire à une image parmi un catalogue d'images disponibles, une des sources les plus utilisées dans ce cadre d'applications est le lecteur de vidéodisque. Celui-ci, en effet, contrairement à un magnétoscope par exemple qui constitue une mémoire à accès séquentiel, offre un temps d'accès moyen à une image particulière compatible avec ce type d'application.

Ceci n'est cependant pas limitatif des sources utilisables dans le cadre de l'invention. Pour des applications particulières, on peut avoir recours à des mémoires rapides à semiconducteurs à accès aléatoire.

La transmission d'images de qualité télévision, même s'il s'agit d'images fixes ou faiblement animées nécessite presqu'obligatoirement le recours à des canaux de transmission large bande.

En effet, si l'on veut simultanément servir un grand nombre d'abonnés, tout en leur offrant une sélection parmi un nombre important d'images disponibles, il y a lieu d'utiliser des canaux de transmission large bande ou à haut débit à haut débit sauf à allonger indûment le temps d'attente.

L'utilisation effective qui est faite de ces canaux peut se concevoir de différentes manières.

Une approche immédiate consisterait à personnaliser les accès à des serveurs interactifs larges bandes, comprenant par exemple plusieurs lecteurs de vidéodisques pilotés par un calculateur unique.

Il y a alors établissement d'une communication bidirectionnelle permanente entre un usager et le serveur, comprenant typiquement un canal large bande unidirectionnel du serveur à l'usager et un canal numérique basse vitesse permettant au moins des transmissions entre l'abonné et le serveur. Ce dernier canal permet la transmission des ordres de sélection et l'établissement effectif de la connexion.

Cette solution très simple ne peut dans la réalité être mise en oeuvre car elle conduit à des installations onéreuses et ne permettant en aucune façon une utilisation optimale des ressources offertes, puisqu'un canal large bande est totalement dédié à un seul abonné, sur la totalité de la chaîne des organes de transmission, et ce, pendant toute la durée de l'utilisation du service.

Une première solution pourrait être l'utilisation du canal à haut débit ou à large bande que pendant les seules périodes jugées nécessaires d'une consultation. Seul le canal numérique à faible vitesse serait utilisé à temps complet, la liaison haut débit ne serait établie entre le serveur et l'abonné que pendant le temps nécessaire à la transmission d'une image sélectionnée par celui-ci et à la mise en mémoire de cette image par le terminal de l'abonné. Le canal de liaison haut débit est ainsi libéré pendant la majeure partie du temps et mis à la disposition d'autres abonnés.

Bien qu'apportant une amélioration, ce procédé ne permet pas l'optimisation maximale de la ressource que constitue le canal de transmission large bande.

L'invention se fixe pour but d'apporter une solution à ce problème.

Le procédé de l'invention est basé sur le partage de la ressource principale que constitue le canal de transmission large bande entre plusieurs abonnés ce qui permet de limiter fortement le nombre de lignes sortantes des serveurs larges bandes et par conséquent de réduire fortement le coût de ce type de service.

L'invention a donc pour objet un procédé interactif de consultation par un terminal d'abonné d'une banque d'images fixes de qualité télévision par l'intermédiaire d'un serveur connecté à un réseau de transmissions d'informations, la banque mémorisant au moins une collection déterminée d'images, caractérisé en ce qu'il comprend au moins les étapes suivantes :

a) transmission séquentielle et cyclique par un premier canal de transmissions, à large bande, auquel sont connectés tous les terminaux d'abonnés, de signaux représentant chacun une desdites images, accompagnés de signaux d'identification de cette image dans la collection déterminée ;

b) transmission vers le serveur par au moins l'un des terminaux connectés au réseau de transmissions, par un second canal de transmissions à faible débit, de signaux de sélection d'au moins une desdites images de la banque ;

c) surveillance, par chaque terminal ayant transmis des signaux de sélection d'images, des signaux d'identification d'images transmis sur ledit canal à large bande ;

d) mémorisation dans chaque terminal d'abonné des signaux représentant une image dont les signaux d'identification correspondent aux signaux de sélection transmis au serveur ;

e) et exploitation de ces signaux mémorisés pour un affichage sur des moyens de visualisation de l'image correspondante.

L'invention a encore pour objet un système interactif de consultation d'une banque d'images par l'intermédiaire d'un serveur connecté à un réseau de transmission pour la mise en oeuvre du procédé.

L'invention sera mieux comprise et d'autres particularités et avantages apparaîtront à la lecture de la description qui suit en références aux figures annexées parmi lesquelles :

- la figure 1 est un système de consultation selon une première variante de réalisation de l'invention ;

- la figure 2 représente schématiquement l'organisation d'une mémoire d'images ;

- la figure 3 est un système de consultation selon une deuxième variante de réalisation de l'invention ;

- la figure 4 est un système de consultation selon une variante préférée de l'invention.

Comme il a été indiqué, le procédé de l'invention est basé sur le partage de la ressource que constitue le canal de transmission d'informations large bande entre plusieurs abonnés, ce qui permet de limiter fortement le nombre de lignes sortantes des serveurs large bande et par conséquent de réduire fortement le coût de ce type de service.

Il s'applique de préférence à la diffusion d'images fixes ou faiblement animées. Ceci ne constitue pas d'ailleurs une limitation importante, car les applications concernées par ce type de diffusion sont les plus nombreuses.

Le procédé selon l'invention implique également une possibilité de mémorisation au moins temporaire de l'image sélectionnée et reçue au niveau du terminal de l'abonné connecté au réseau.

Là encore, il ne s'agit pas d'une limitation importante car différents types d'appareils de mémorisation d'image suffisamment bon marché sont actuellement disponibles ou sont en cours de développement.

On peut également avoir recours, pour certaines applications, à une mémoire vive à semiconducteurs de type "RAM" dont sont pourvus les microordinateurs, ces derniers pouvant d'ailleurs être utilisés à l'aide d'organes d'interface adaptés, comme terminal de sélection et de visualisation. Pour cette dernière fonction, ils comprennent un écran cathodique incorporé ou sont reliés à un poste de télévision ou à un moniteur externe.

L'invention va maintenant être explicitée de façon plus détaillée par références aux figures 1 à 4.

La figure 1 illustre un système interactif de consultation de mise en oeuvre du procédé de l'invention selon une première variante de réalisation.

L'architecture du système représentée sur cette figure est commune, en grande partie, aux architectures des systèmes de l'art connu.

Il est généralement prévu un ou plusieurs serveurs. Un seul, portant la référence 1, est représenté sur la figure 1. Celui-ci comprend une source d'image 10 reliée par un canal large bande $C_{12}$ à un organe de multiplexage 2. Ce dernier reçoit d'autres canaux large bande, sous la référence générale $C_{x2}$, en provenance d'autres serveurs non représentés. L'organe de multiplexage transmet les images provenant des différents serveurs, et notamment du serveur 1, à un centre de distribution 3 par l'intermédiaire d'un canal $C_{23}$. Celui-ci comprend un distributeur de programmes 39 communiquant par des canaux larges bandes $CU_1$ et $CU_y$ avec des modules de sélection abonné dont un seul 31 a été représenté sur la figure 1.

De façon plus spécifique, dans le cadre de l'invention, la liaison entre un terminal 4 d'abonné et le centre de distribution est effectuée par l'intermédiaire d'un canal large bande CV et d'un canal à faible débit CN.

Le canal large bande est un canal unidirectionnel capable de véhiculer des signaux de type télévision entre le centre de distribution 3 et l'abonné 4. Il est du type bus, c'est-à-dire connecté non seulement à l'abonné référencé 4, seul représenté, mais à tous les autres abonnés dépendant le module de sélection de l'usager 31. Le canal CN est de préférence un canal de transmission numérique, mais tout autre procédé de transmission peut convenir. Pour une transmission numérique, un débit typique est de l'ordre de 8 kbits. Ce canal doit assurer, au moins, des transmissions dans le sens terminal 4 d'abonné - module de sélection 31, de manière à véhiculer des ordres de sélection. De préférence, il s'agit d'un canal bidirectionnel, le module 31 transmettant différents signaux de services et éventuellement des signaux représentant des informations audio.

De façon classique, le terminal d'abonné 4 comprend un boîtier de raccordement aux canaux CV et CN relié par deux canaux internes correspondants CVI et CNI à un coffret d'adaptation 41. Celui-ci a pour but d'adapter, de façon classique également, les signaux reçus aux conditions d'utilisation imposées par la technologie et la nature des dispositifs composant le terminal d'abonné.

Ce terminal comprend également un organe de visualisation 44, habituellement un appareil de télévision ou un dispositif analogue ainsi qu'un clavier 45 ou un organe de télécommande en faisant fonction. Ce clavier 45 permet de transmettre des signaux, de commande et de sélection, au module de sélection abonné 31. Le clavier communique avec le coffret d'adaptation 41 par l'intermédiaire d'une liaison référencée SC.

Avant de détailler plus avant la composition du terminal 4 d'abonné, il y a lieu de décrire maintenant le fonctionnement du système conformément au procédé de l'invention selon la première variante d'exécution.

La source d'images est organisée selon la structure d'une mémoire à recirculation. Les différentes images disponibles d'un catalogue sont transmises en permanence, l'une après l'autre, par le canal CV et après épuisement du stock d'images, le cycle recommence indéfiniment.

La figure 2 illustre schématiquement l'organisation d'une source d'image permettant cette disposition. Pratiquement cette source 10 est constituée d'un lecteur de vidéodisque analogique comprenant un support d'information 100, une tête de lecture 110 de ce support et les circuits 120 habituels de traitement de signal connectés au canal $C_{12}$ et permettant la transmission des signaux lus vers celui-ci.

Sur le support 100 sont enregistrées une succession de trames images différentes. Un nombre réaliste est de l'ordre de 250 images.

En effet, si l'on accepte un temps moyens d'apparition de l'image de 5 secondes et un temps maximum de 10 secondes, étant donné que dans une période de 1 seconde on peut transmettre 25 images, le nombre d'images maximum est de 250.

Les enregistrements de signaux de trames ont été référencés sur la figure 2 : $I_1$ à $I_{250}$. Chaque trame est précédé de signaux constituant un drapeau d'identification $SA_1$ à $SA_{250}$, c'est-à-dire un code particulier d'identification.

Tous ces signaux sont transmis par le canal CV à large bande et sont reçus par tous les terminaux d'abonnés, notamment par le terminal 4 représenté sur la figure 1. La liaison à haut débit n'est donc pas monopolisée par un seul abonné.

Si l'on se reporte à nouveau à la figure 1, dans le terminal 4 d'abonné outre les organes précédemment décrit, il est prévu conformément à un aspect de l'invention un décodeur d'adresse 42 ou de façon plus générale un organe de surveillance des signaux d'identification d'image connecté par un canal CA au coffret d'adaptation 41. Ce canal CA véhicule les signaux transmis sur le canal CV à tous les terminaux et également des signaux internes générés par le clavier 45. Ces signaux peuvent être simplement constitués par un mot binaire représentant le numéro de l'image désirée et qui doit être comparé au code transmis par les signaux d'identification d'image.

Le décodeur d'adresse 42 génère sur une liaison de sortie SA un signal d'autorisation lorsqu'il reconnaît le signal d'identification précédant l'image sélectionnée, parmi les deux cent cinquante images disponibles dans l'exemple particulier décrit.

Le terminal 4 comprend enfin une mémoire d'image 43 recevant en permanence, par un canal interne CVA, les signaux reçus par le terminal. Lorsque le signal d'autorisation est activé, ces signaux qui représentent une image sont interceptés au vol et mémorisés.

La mémoire d'image 43 est connectée par un canal CVV aux moyens de visualisation 44. De manière classique, par lecture cyclique de la mémoire image, on peut afficher en permanence ou temporairement, en simultanéité ou en différé, l'image sélectionnée.

Si la mémoire d'image a une capacité d'emmagasinement de plusieurs trames d'images différentes, celles-ci peuvent être enchaînées suivant une séquence programmable à l'aide du clavier de sélection 45. Cette séquence peut constituée une séquence faiblement animée si le nombre d'images est suffisant.

Seul le canal CN est donc monopolisé par l'usager pendant la durée d'une transaction, bien que des procédés de multiplexage mettant en oeuvre des organes du type concentrateur, s'agissant de transmissions à faibles débits, sont parfaitement envisageables. Il y a d'ailleurs lieu de remarquer que ce canal ne joue pas le rôle primordiale dans cette variante de réalisation.

Il peut être utilisé pour transmettre et recevoir des informations auxiliaires et ne joue aucun rôle actif dans la sélection des images.

Sur la figure 3 est représenté un système interactif de consultation d'images pour la mise en oeuvre d'une deuxième variante du procédé selon l'invention.

Les éléments communs avec le système représenté sur la figure 1 portent les mêmes références et ne seront pas redécrits.

Cette variante pemet, tout en conservant une organisation de type "paquet fixe d'images" caractéristique de la variante qui vient d'être décrite en relation avec les figures 1 et 2, d'augmenter le choix de proposant une sélection supplémentaire parmi plusieurs paquets, collections ou magazines.

Ces magazines pourront comporter, comme il a été rappelé, chacun deux cent cinquante trames d'images.

Chaque séquence d'images d'un magazine est, comme précédement, émise par une source $S_1$ à $S_n$, montée en boucle selon la structure schématisée à la figure 2.

Le terminal 4 d'abonné est doté d'une structure identique à celle représentée sur la figure 1.

Une première demande est émise par un terminal d'abonné, par exemple par le terminal 4, sous la forme d'un signal de sélection de magazine qui est transmis via le canal à faible débit CN au centre de distribution 3.

Outre les organes décrits en relation avec la figure 1, celui-ci comprend un concentrateur de données 32 connecté par une liaison $CSU_1$ au module de sélection abonné 31. C'est par cette liaison que la demande de sélection de magazine est transmise au concentrateur de données 32. Celui-ci est connecté à des lignes similaires représentées sous la référence générale $CSU_y$ véhiculant des demandes de sélection en provenance d'autres abonnés.

Les procédés classiques de résolution de priorité peuvent être mis en oeuvre au niveau du concentrateur de données 32 en cas de conflits : arrivée simultanée de deux demandes de sélections ou plus, dans la mesure où ces demandes concernant des magazines différents. Dans cas contraire, il n'y a pas de conflit.

La concentration de données émet sur un canal de liaison unique CSU un signal de sélection des magazines parmi les magazines disponibles.

Dans le serveur 1, ces magazines se présentent physiquement sous la forme de sources d'images distinctes $S_1$ à $S_n$, chacune étant analogue à celle, 10, représentée sur la figure 2.

Chaque source $S_1$ à $S_n$ est associée à un canal large bande $C_1$

à $C_n$ connecté sélectivement au canal unique $C_{12}$ via un organe de multiplexage 11 du type grille de commutation à large bande. Cet organe est destiné à effectuer une sélection du type "un parmi n", sous la commande d'un circuit 12 de commande d'adressage ou de sélection. Ce circuit 12 reçoit les signaux de sélection de magazines véhiculés par le canal de laisons CSU et délivre sur une sortie CS un signal d'adresse ou de sélection positionnant la grille de commutation 11 de telle manière qu'une liaison soit établie entre le canal $C_{12}$ et la source correspondant au magazine selectionné.

Une fois cette étape réalisée, le processus de sélection d'imag es s'effectue selon le procédé décrit en relation avec la figure 1.

Les différentes trames d'images générées par la source sélectionnée sont transmises, l'une après l'autre, sur le bus CV à tous les terminaux qui y sont connectés.

Le terminal 4 d'abonné ayant émis la commande de sélection scrute les signaux d'identifications précédant les signaux de trames et le décodeur d'adresse 42, qui a reçu un code correspondant au signal de sélection d'image par le clavier 45, autorise la mémorisation de l'image sélectionnée lorsqu'il y a concordance entre les données d'identification et les données de sélection.

Comme précédemment, lorsque toutes les trames mémorisées par une des sources $S_1$ à $S_n$ sont transmises, le cycle recommence à partir de la première trame (figure 2 : $I_1$), ce jusqu à ce qu'un signal de sélection de magazine différent soit reçu par les circuits de commande 12.

Lorsque plusieurs commandes de sélection de magazine différents sont pendantes, il est nécessaire d'attendre qu'au moins toutes les trames du magazine précédemment sélectionnées aient été diffusées avant d'effectuer une commutation sur une autre source pour accéder aux images d'un nouveau magazine.

Dans cette variante de réalisation, le canal CN à faible débit joue un rôle actif dans la première étape de sélection : la sélection d'un magazine parmi n.

Le canal CV est, comme précédemment, partagé entre tous les abonnés. Mais le temps d'attente peut être allongé statistiquement si des accès à des images appartenant à des magazines différents sont demandés.

Cependant, le procédé selon cette variante présente l'avantage d'offrir un plus grand choix : n fois plus grand si les magazines sont d'égales capacités.

Il y a lieu de remarquer que, statistiquement également, le temps d'accès moyen n'est nullement allongé dans les mêmes proportions car il faudrait dans ce cas que n abonnés désirent accéder simultanément à des magazines tous distincts.

Selon la nature de la banque d'images, la répartition des images dans les différents magazines peut être dans certains cas optimisée en regroupant dans un ou plusieurs magazines particuliers les images susceptibles d'un choix plus fréquent. Ce regroupement peut être effectué à partir de données statistiques. Il peut y avoir une reconfiguration périodique des magazines.

Les variantes du procédé de l'invention qui viennent d'être décrites, en relation avec les systèmes représentés sur les figures 1 et 3, sont basés sur la diffusion d'un paquet ou de plusieurs paquets d'images fixes, non modifiables ou de façon très lentes, ce qui entraîne un certain nombre de limitations liées notamment à un couple "nombre de pages - temps d'accès".

Il est clair que si la ressource principale que constitue le canal large bande CV est mis en commun entre tous les abonnés, il y a diffusion, en moyenne statistique, d'un certain nombres de trames d'images inutiles c'est-à-dire qui ne sont sélectionnées par aucun des abonnés. Ceci est dû à la nature cyclique de la transmission des trames d'images. Au moins un magazine entier doit être diffusé, quelque soit le nombre d'images sélectionnées à l'intérieur de ce magazine.

Dans une variante de réalisation supplémentaire du procédé de l'invention, variante préférée, le canal est utilisé en temps partagé.

Cette variante va être explicité en relation avec la description du système la mettant en oeuvre, système représenté sur la figure 4.

Selon cette variante, l'architecture générale des terminaux 4 d'abonnés, du centre de distribution 3 et du multiplexeur 2 est identique à celle décrite en relation avec le système représenté à la figure 3. Les éléments constitutifs de ces dispositifs ne seront pas redécrits.

Seule l'architecture du serveur 1 est plus complexe pour permettre la mise en oeuvre du procédé selon cette variante supplémentaire.

Le procédé selon cette variante peut être résumé comme suit :

- première étape : sélection d'un magazine par un des abonnés (terminal 4) ;
- deuxième étape : sélection d'une image particulière du magazine sélectionné ;
- troisième étape : sélection au niveau du serveur 1 d'une source particulière correspondant au magazine sélectionné ;
- quatrième étape : sélection au niveau du serveur 1 de l'image sélectionnée de ce magazine ;
- cinquième étape : marquage de l'image sélectionnée ;
- sixième étape : mise en mémoire de cette image ;
- septième étape : répétition éventuelle des étapes une à six en fonction des demandes de sélections successives provenant des abonnés ;
- huitième étape : décharge cyclique des images mémorisées et transmission des signaux correspondant vers les abonnés sur le canal large bande CV
- et neuvième étape : réception sélective des signaux de trames images par les abonnés et mises en mémoire des images sélectionnées par ces abonnés.

Les première et deuxième étapes sont identiques à celles réalisées dans le procédé selon la deuxième variante décrite. Un abonné désirant sélectionner une image transmet des signaux de sélection via le canal CN. Les ordres de sélection sont reçus par le concentrateur 32 et transmis au serveur 1. Eventuellement, les étapes un et deux peuvent être réduites à une seule étape s'il n'y a pas répartition des images en magazines différentes.

Le circuit de commande 12 de la figure 3 est remplacé avantageusement par un calculateur 13, par exemple un micro-ordinateur à programme enregistré, qui reçoit séquentiellement les ordres de sélection.

Le serveur 1 comprend, comme dans la deuxième variante d'exécution, plusieurs sources d'images $S_1$ à $S_n$ constituées chacun, par exemple, par un lecteur de vidéodique. Ces sources peuvent enregistrer toutes le même paquet d'images ou au contraire des images différentes.

Ces sources communiquent avec l'extérieur par des canaux de sortie large bande $C'_1$ à $C'_n$ transmettant cycliquement les différentes images enregistrées sur les vidéodisques chargés dans les lecteurs S1 à Sn.

Le calculateur 13, en réponse aux ordres de sélections véhiculés par le canal CSU, transmet des signaux de commande à des circuits de sélections $SEL_1$ à $SEL_n$ par un canal $CS_1$.

En réponse à ces signaux, ces derniers circuits permettent le transfert des signaux de trames correspondant à une image particulière sélectionnée, image générée par une des sources $S_1$ à $S_n$. Ces signaux sont transférés sur des canaux de sortie large bande $C'_1$ à $C'_n$ reliés à des entrées correspondantes d'une grille de commutation large bande 11.

Le calculateur 13 transmet également des signaux de commande par le canal $CS_1$ à un circuit de marquage et de commande 14 qui génère en réponse sur un canal de sortie $CS_2$ des signaux commandant le couplage sélectif des signaux présents sur les canaux d'entrée $C'_1$ à $C'_n$ vers des canaux de sortie larges bandes $CG_1$ à $CG_n$.

En outre le circuit 14 à pour fonction de marquer les signaux de trames ainsi diffusés en les faisant précéder d'un paquet de données d'identification comprenant des données d'identification d'image et éventuellement d'identification du destinataire.

Les signaux de trames d'images, ainsi marqués sont alors enregistrés dans des mémoires d'images individuelles $M_1$ à $M_m$.

Le nombre m de ces mémoires n'est pas lié au nombre de source n. Il suffit d'opérer, sous la commande du circuit 14 un décodage d'adresse "1 parmi n" en entrée et "1 parmi m" en sortie et d'établir, de façon classique, un couplage par les circuits de la grille de commutation 11, entre la sortie et l'entrée sélectrionnées.

L'ensemble est complété par un circuit 15 de décharge cyclique qui lit en séquence les mémoires d'images et transmet sur le canal $C_{12}$ les signaux correspondants aux différentes trames d'images sélectionnées ainsi que les signaux d'identification associés.

Les étapes suivantes sont communes aux variantes précédemment décrites, à la simple différence que si les signaux d'identification comprennent un code correspondant à un terminal d'abonné la reconnaissance peut s'effectuer sur ce critère.

Cependant cette dernière variante peut présenter l'inconvénient de nécessiter plusieurs codes associés à chaque image si plusieurs abonnés ont sélectionné la même image, sauf à la transmettre plusieurs fois avec un code d'identification différent.

L'image ainsi reconnue est alors prélevée au vol et enregistrée dans la mémoire d'image 43 de l'abonné.

On réalise facilement que le paquet d'images réalisé par les différents enregistrements dans les mémoires $M_1$ à $M_m$ est un paquet à configuration dynamique car sa composition évolue dans le temps et correspond à une configuration optimale puisqu'elle est l'image de la sélection, réalisée pratiquement en temps réel, par les abonnés. Notamment tous les signaux transmis par le canal large bande CV sont utiles puisqu'ils vont effectivement être utilisés par au moins un abonné connecté au réseau de distribution.

Le choix effectué pendant les étapes un et deux du procédé peut être effectué a priori sur un fichier mis à la disposition de l'abonné, mais il peut être effectué également de façon interactive sur un fichier central. Pour ce faire, le canal CN, et ce seul canal, peut être utilisé. La première étape est alors précédée d'une étape préliminaire d'interrogation d'un fichier central des images disponibles qui peut refléter ainsi des mises à jour plus fréquentes. Il est alors naturellement nécessaire que le canal CN soit un canal de transmissions bilatérales. La possibilité de transmission dans le sens centre de distribution-abonné peut en outre être mise à profit pour transmettre à celui-ci des signaux de services divers (menus, avertissements, informations de panne, etc.) ou augmenter les possibilités d'interaction (guidage des manoeuvres à effectuer par l'abonné, etc.). Ces aspects sont bien connus et il est inutile de les détailler.

Pour fixer les idées, on va indiquer maintenant des données typiques concernant cette variante d'exécution du procédé selon l'invention qui en constitue la variante préférée.

On suppose que les images sont stockées sur des vidéodisques contenant les mêmes séries d'images. Si le temps d'accès maximum est de deux secondes, une batterie de cinquante lecteurs de vidéodisques peut fournir en moyenne vingt cinq images fixes par seconde.

Ces images sont chargées dans vingt cinq mémoires d'images. Cet ensemble de mémoire est déchargée cycliquement toutes les secondes.

En une seconde on peut donc fournir vingt cinq abonnés, et plus si plusieurs abonnés ont sélectionné une même image.

Si ces abonnés sont répartis en grappe de trois cent soixante quinze abonnés, la fréquence moyenne des demandes satisfaites est de 15 secondes.

Les architectures de systèmes pour la mise en oeuvre du procédé de l'invention selon les différentes variantes qui viennent d'être décrites ne sont naturellement pas limitées aux seules possibilités détaillées en relation avec les figures 1 à 4. Toutes variantes à la portée de l'homme de métier, notamment dans le choix des éléments constitutifs des systèmes, tombent dans le cadre de l'invention. Les caractéristiques de ces différents éléments, par exemple mémoires d'images, circuits de commande, appareil de visualisation, etc. dépendent largement des technologies sélectionnées.

Les solutions mises en oeuvre peuvent faire appel aux techniques numériques pures.

A titre d'exemple, si l'on sélectionne comme source d'images un disque optique numérique, des caractéristiques associées à un tel appareil sont les suivantes :

- capacité : 16 .$10^9$ bits, soit environ 16000 trames d'images ;
- temps d'accès moyen : 0,1 seconde ;
- débit utile 8 M bits/s.

Une image correspond typiquement à 1 M bits. Dans ce cas chaque lecteur peut fournir quatre images fixes par seconde, ce qui correspond au cumul des temps d'accès et de lecture. Pour fournir vingt cinq images fixes par seconde, il est nécessaire de disposer de six lecteurs environs. Le débit en lignes correspondant à ces trafic est d'environ 25 M bits/s.

## REVENDICATIONS

1. Procédé interactif de consultation par un terminal (4) d'abonné d'une banque d'images fixes de qualité télévision par l'intermédiaire d'un serveur (1) connecté à un réseau (CV, CN) de transmissions d'informations, la banque mémorisant au moins une collection déterminée d'images, caractérisé en ce qu'il comprend au moins les étapes suivantes :

a) transmission séquentielle et cyclique par un premier canal de transmissions (CV) à large bande, auquel sont connectés tous les terminaux (4) d'abonnés, de signaux ($I_1$ à $I_{250}$) représentant chacun une desdites images, accompagné de signaux ($SA_1$ à $SA_{250}$) d'identification de cette image dans la collection déterminée ;

b) transmission vers le serveur (1) par au moins l'un (4) des terminaux connectés au réseau (CV, CN) de transmissions, par un second canal de transmissions à faible débit (CN), de signaux de sélection d'au moins une desdites images de la banque ;

c) surveillance par chaque terminal (4) ayant transmis des signaux de sélection d'images, des signaux d'identification d'images transmis sur ledit canal à large bande ;

d) mémorisation dans chaque terminal (4) d'abonné des signaux représentant une image dont les signaux d'identification correspondent aux signaux de sélection transmis au serveur (1) ;

e) et exploitation de ces signaux mémorisés pour un affichage sur des moyens de visualisation de l'image correspondante.

2. Procédé selon la revendication 1, caractérisé en ce que, la banque comprenant plusieurs collections d'images fixes mémorisées, il comprend en outre une étape préliminaire consistant en la transmission par au moins un terminal (4) d'abonné, par l'intermédiaire dudit canal (CN) à faible débit, d'un signal de sélection d'une de ces collections et en ce que l'étape de transmission séquentielle et cyclique de signaux représentant des images, comprend au moins une transmission des signaux représentant toutes les images de ladite collection.

3. Procédé selon la revendication 1, caractérisé en ce que la banque comprenant plusieurs collections d'images fixes mémorisées, il comprend les étapes supplémentaires de configuration dynamique d'une collection d'images supplémentaire constituée à partir desdites collections d'images fixes mémorisées en relation avec des signaux de sélections d'images transmis par des terminaux (4) d'abonnés, de marquage des images de cette collection consistant à combiner, aux signaux représentant les images, des signaux d'identification de celles-ci et en la mémorisation temporaire de cette collection d'images ; et en ce que l'étape de transmission séquentielle et cyclique de signaux représentant des images consiste en au moins une transmission complète de tous les signaux représentant les images de ladite collection supplémentaire et de leurs signaux d'identification.

4. Procédé selon la revendication 3, caractérisé en ce que les signaux d'identification associés à chaque image comprennent des signaux d'identification du terminal (4) ayant transmis un signal de sélection d'images.

5. Procédé selon l'une quelconque des revendications 1 à 4, caractérisé en ce que les étapes de transmissions de signaux de sélection d'image par un terminal (4) d'abonné, de surveillance des signaux d'identification et de mémorisation des signaux représentant ces images sont répétées plusieurs fois et en ce que l'étape d'exploitation de ces signaux consiste à afficher les images mémorisées en séquence de manière à obtenir une séquence animée à contenu programmable.

6. Procédé selon l'une quelconque des revendications 1 à 5, caractérisé en ce qu'il comprend une étape préliminaire supplémentaires de consultation interactive, par un abonné, d'un fichier central décrivant le contenu desdites collections d'images fixes consistant en des transmissions bilatérales, par le canal à faible débit (CN), de signaux représentant des données d'interrogation-réponse, entre le terminal (4) de l'abonné et le serveur (1).

7. Système interactif de consultation d'une banque d'images fixes de qualité télévision pour la mise en oeuvre du procédé selon l'une quelconque des revendications 1 à 6, comprenant un centre de distribution (3) auquel est connecté au moins un serveur (1) dans lequel sont mémorisées lesdites images et un réseau de transmission d'informations (CV, CN) auquel sont connectés des terminaux (4) d'abonnés ; caractérisé en ce que le réseau de transmission comprend un canal (CV) à large bande transmettant des signaux de type télévision, auquel sont connectés tous les terminaux (4) d'abonnés ; au moins un moyen de mémorisation (10 ; $S_1$ à $S_n$) source de signaux ($I_1$ à $I_{250}$) représentant lesdites images et de signaux d'identification ($SA_1$ à $SA_n$) de ces images, des moyens (120 ; 15) de transmissions séquentielles et cycliques de ces signaux sur ledit canal (CV) à large bande par l'intermédiaire du centre de distribution (3) ; des moyens (43) de mémorisation de signaux représentant au moins une image dans chaque terminal (4) et des moyens de surveillance (42) des signaux d'identification transmis par le canal large bande (CV) à tous les terminaux (4), ces moyens autorisant ladite mémorisation d'une image sur reconnaissance d'un code particulier ; et en ce que, chaque terminal (4) comprenant des moyens (45) permettant la génération d'un signal de sélection, il comprend un canal à faible débit (CN) reliant chaque terminal au centre de distribution de manière à transmettre ce dit signal de sélection à un serveur (1).

8. Système selon la revendication 7, caractérisé en ce que, chaque serveur (1) comprenant plusieurs moyens de mémorisation ($S_1$ à $S_n$) sources de signaux représentant des images, chacun de ces moyens mémorisant une collection particulière d'image, il comprend en outre des moyens de sélection (32, 12 ; 32, 13, $SEL_1$ à $SEL_n$) de l'une de ces sources ($S_1$ à $S_n$) et d'aiguillage (11) de ces signaux de manière à ce qu'ils soient transmis par l'intermédiaire du centre de distribution (3) audit canal large band (CV).

9. Système selon la revendication 8, caractérisé en ce qu'il comprend en outre des moyens de mémorisation supplémentaires

($M_1$ à $M_m$) de signaux représentant une collection d'images issues de sélections par des terminaux (4) d'abonnés d'images particulières parmi celles mémorisées dans lesdits moyens de mémorisation ($S_1$, $S_n$) sources de signaux, des moyens de marquages de ces images (14) associant auxdits signaux des signaux d'identification et des moyens de lecture cyclique et de transmission (15) des signaux mémorisés dans les moyens de mémorisation supplémentaires ($M_1$ à $M_m$).

10. Système selon la revendication 9, caractérisé en ce que les moyens de sélection comprennent un calculateur à programme enregistré (13) générant en réponse à la réception de signaux de sélections d'images transmis par des terminaux (4) d'abonné, des signaux de commande de sélection d'un des moyens de mémorisation ($S_1$ à $S_n$), de sélection d'une image particulière mémorisée dans ces moyens de mémorisation, de commande de moyens de marquage (14) de l'image sélectionnée et de commande des moyens d'aiguillage (11) de manière à établir une liaison entre le moyen de mémorisation sélectionné ($S_1$ à $S_n$) et l'un desdits moyens de mémorisation supplémentaires ($M_1$ à $M_m$).

11. Système selon l'une quelconque des revendications 7 à 10, caractérisé en ce que les moyens de mémorisation ($S_1$ à $S_n$) sources de signaux représentant des images comprennent chacun un lecteur de vidéodisque enregistrant lesdits signaux.

12. Système selon l'une quelconque des revendications 7 à 11, caractérisé en ce que le canal (CN) faible débit reliant chaque terminal (4) d'abonné au centre distributeur (3) est un canal de transmission bidirectionnel de données numériques.

0190550

FIG_1

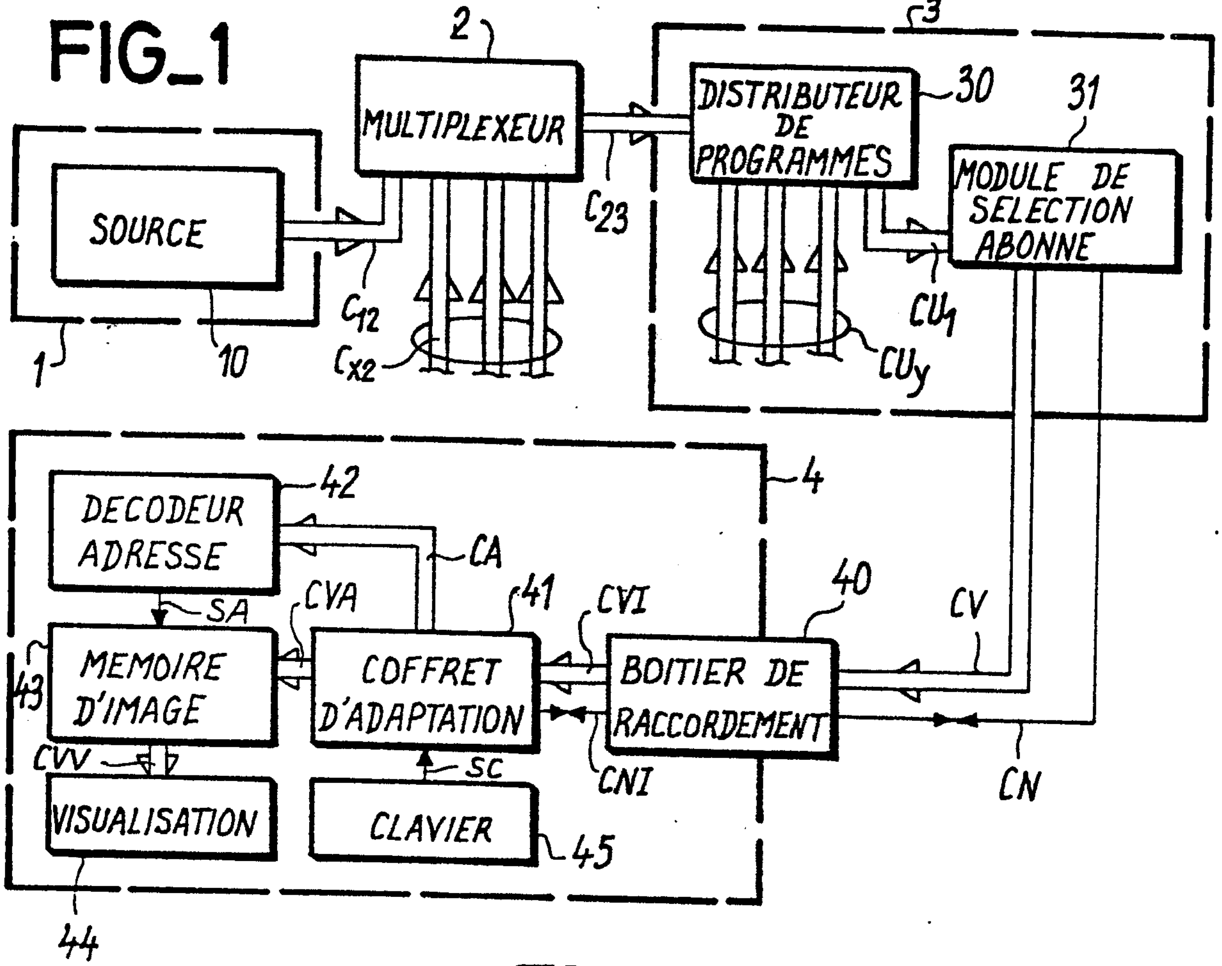


FIG_2

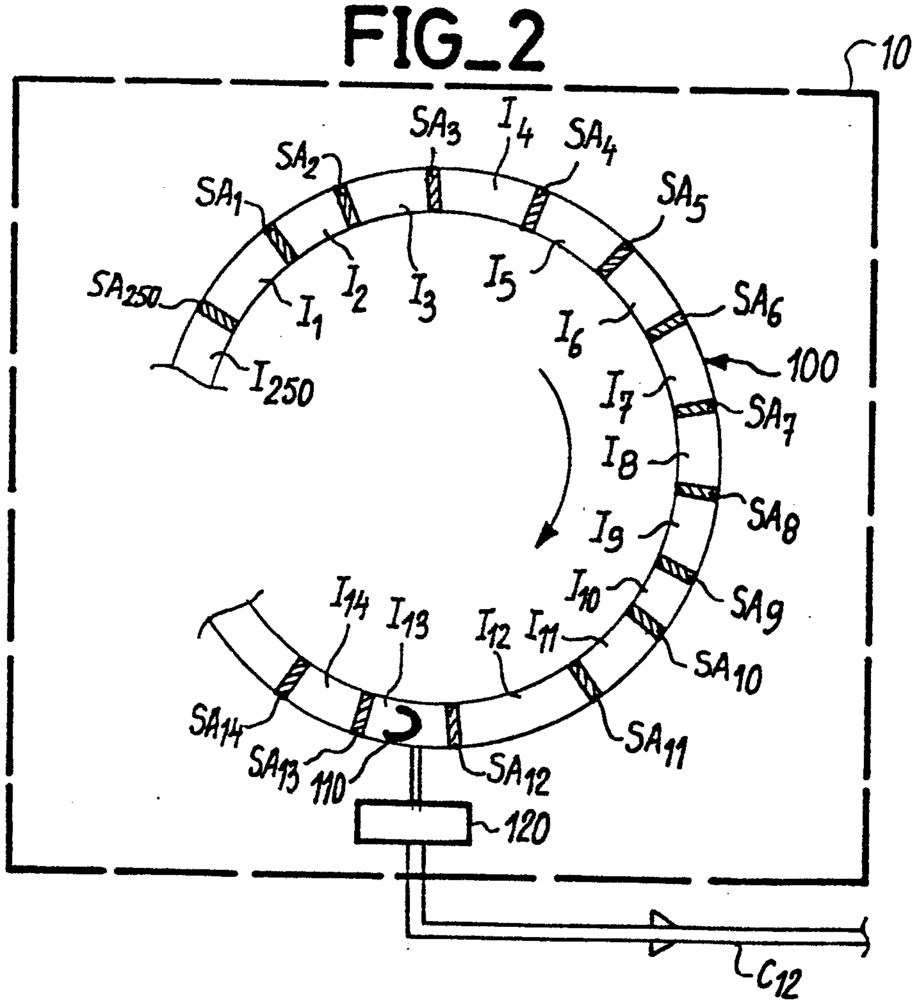

0190550

2/3

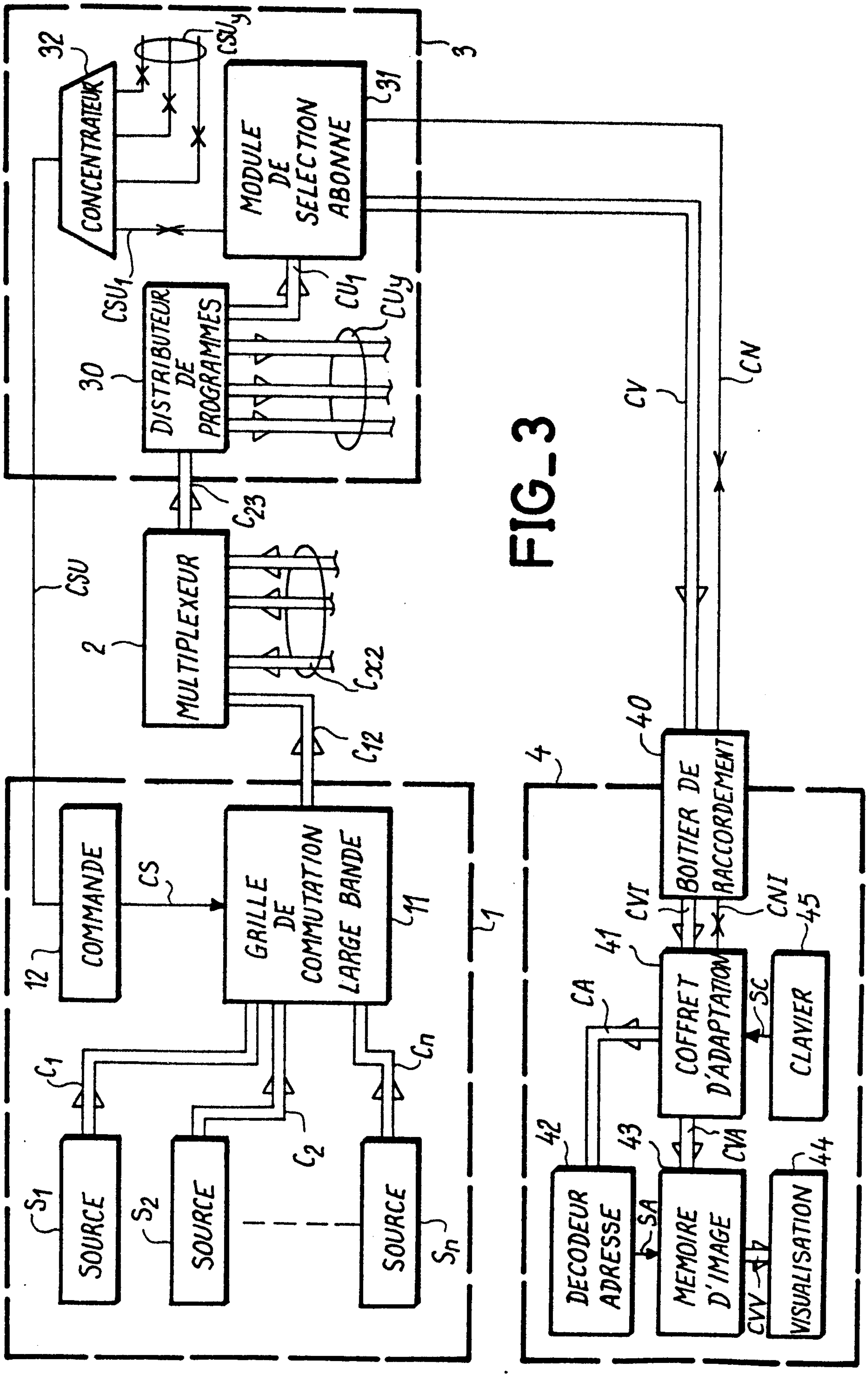


FIG_3

FIG_4

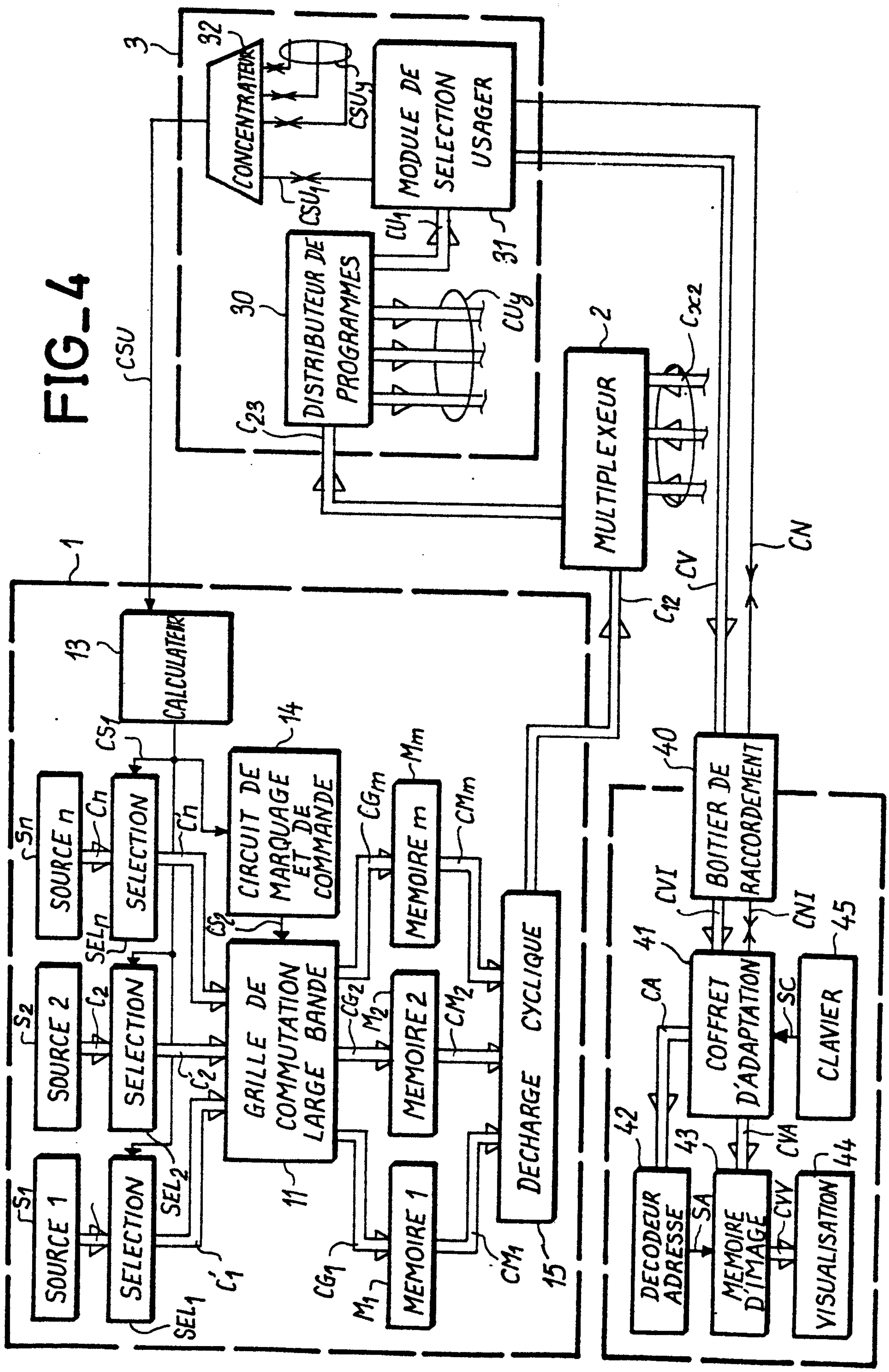
SOURCE 1
SOURCE 2
SOURCE n
SELECTION
SELECTION
SELECTION
GRILLE DE COMMUTATION LARGE BANDE
CIRCUIT DE MARQUAGE ET DE COMMANDE
CALCULATEUR
MEMOIRE 1
MEMOIRE 2
MEMOIRE m
DECHARGE CYCLIQUE
MULTIPLEXEUR
DISTRIBUTEUR DE PROGRAMMES
CONCENTRATEUR
MODULE DE SELECTION USAGER
BOITIER DE RACCORDEMENT
COFFRET D'ADAPTATION
CLAVIER
DECODEUR ADRESSE
MEMOIRE D'IMAGE
VISUALISATION
1
2
3
11
13
14
15
30
31
32
40
41
42
43
44
45
S1
S2
Sn
SEL1
SEL2
SELn
C'1
C'2
C'n
C2
Cn
CS1
CSU
CSU1
CSUy
CU1
CUy
C23
C12
Cx2
CV
CN
CVI
CNI
CA
SA
SC
CVA
CVY
CG
CG1
CG2
CGm
M1
M2
Mm
CM1
CM2
CMm

Office européen des brevets

# RAPPORT DE RECHERCHE EUROPEENNE

0190550

Numéro de la demande

EP 86 10 0025

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | IEEE TRANSACTIONS ON COMMUNICATIONS, vol. COM-23, no. 1, janvier 1975, pges 104-107, IEEE, New York, US; K. MAEDA: "Individualized still-picture communication on a two-way broad-band CATV system" * Page 106, colonne de gauche, lignes 4-12; page 106, colonne de gauche, lignes 44 - colonne de droite, ligne 20; figures 2,6 * --- | 1,7 | H 04 N 1/00 |
| A | GB-A-2 095 949 (EECO) * Page 1, lignes 80-90, 127-130; page 2, lignes 21-47, 62-63; page 3, lignes 91-96; page 3, ligne 129 - page 4, ligne 75; page 7, lignes 6-10; figures 1,3 * ----- | 1,7-9 | |
| | | | DOMAINES TECHNIQUES RECHERCHES (Int. Cl.4) |
| | | | H 04 N 1/00 |

Le present rapport de recherche a été établi pour toutes les revendications

| Lieu de la recherche | Date d'achèvement de la recherche | Examinateur |
|---|---|---|
| LA HAYE | 04-04-1986 | YVONNET J.W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant